# EUROPEAN PATENT APPLICATION

(11) **EP 3 822 861 A1**
(43) Date of publication of application: **19.05.2021**
(21) Application number: 20206167.7
(22) Date of filing: 03.11.2015
(51) Int. Cl.: G06K 19/02, B32B 15/04, B32B 9/00

(54) **CERAMIC-CONTAINING AND CERAMIC COMPOSITE TRANSACTION CARDS**

(30) Priority: 03.11.2014 US 201462074305 P; 21.05.2015 US 201514718596
(62) Divisional of application: 15856207.4
(71) Applicant: Composecure, LLC, Somerset NJ 08873 (US)
(72) Inventor: HERSLOW, John, Scotch Plains, NJ New Jersey 07076 (US); LOWE, Adam, Somerset, NJ New Jersey 08873 (US)
(74) Representative: Scheele Wetzel Patentanwälte

(57) **Abstract**

A transaction card includes a monolithic ceramic card body having one or more pockets, and at least one of a magnetic stripe, a barcode, and a laser signature portion. The one or more pockets may be configured to receive at least one of the magnetic stripe, the barcode, a contact chip module, a contactless chip module, a dual interface chip module, a booster antenna, a hologram or commercial indicia. A transaction card may also include a substrate layer having a first side and a second side. A first ceramic layer is connected to the first side of the substrate layer.

## Description

### CROSS REFERENCE TO RELATED APPLICATIONS

This PCT application claims priority to U.S. Provisional Patent Application No. 62/074,305, filed November 3, 2014, and U.S. Patent Appl. No. 14/718,596, filed May 21, 2015, the disclosures of which are incorporated herein by reference in their entirety for all purposes.

### FIELD OF THE INVENTION

This invention relates to the field of transaction cards and, more particularly, transaction cards having at least one layer or coating of ceramic.

### BACKGROUND OF THE INVENTION

Conventional transaction cards are made from thermoplastic materials, such as polyvinyl chloride (PVC) and polyethylene terephthalate (PET). These "standard" transaction cards suffer from low durability and are susceptible to degradation and/or destruction due to environmental factors. For example, exposure to sunlight and/or moisture can result in the disruption of the chemical bonds in the plastic, causing the transaction card to warp, crack, and/or fade. Similarly, plastic cards are easily bent or severed. In both cases, a plastic transaction card may become unusable due to this damage.

In the modern transactional card market, it is often desirable to obtain a "premium" feel, look, or tactile feature that may be marketed to an affluent market. These transactional cards may be used as debit cards, credit cards, or pre-paid cards. As part of this premium feel, a card that is heavier than a standard plastic card is often desired, as well as an increased durability of the card body due to the cost of card.

Existing premium transaction cards are typically made entirely or partially from metal. Metal cards demonstrate an enhanced durability as compared to the standard plastic card. However, some metal cards may disadvantageously: 1) require extensive machining; 2) produce electrostatic discharge; and 3) interfere with radio frequency radiation for contactless transactions.

### SUMMARY OF THE INVENTION

Various aspects of the invention relate to transaction cards.

One aspect of the invention comprises a transaction card having a monolithic ceramic card body including one or more pockets, and at least one of a magnetic stripe, a barcode, and a laser signature portion.

Another aspect of the invention comprises a transaction card having a substrate layer having a first side and a second side. A first ceramic layer is connected to the first side of the substrate layer.

Yet another aspect of the invention comprises a transaction card having a substrate core layer having a first side and a second side. A first ceramic layer is connected to the first side of the substrate core layer. A second ceramic layer is connected to the second side of the substrate core layer.

Still another aspect of the invention comprises a transaction card having a substrate core layer having a first side and a second side. A first ceramic layer is connected to the first side of the substrate core layer. A second ceramic layer is connected to the second side of the substrate core layer. The first side and the second side of the substrate core layer define pockets on each side of the substrate core layer, and the first ceramic layer and the second ceramic layer are disposed in the pockets.

It is to be understood that both the foregoing general description and the following detailed description are exemplary, but are not restrictive, of the invention.

### BRIEF DESCRIPTION OF THE DRAWINGS

The invention is best understood from the following detailed description when read in connection with the accompanying drawings, with like elements having the same reference numerals. When a plurality of similar elements are present, a single reference numeral may be assigned to the plurality of similar elements with a small letter designation referring to specific elements. When referring to the elements collectively or to a non-specific one or more of the elements, the small letter designation may be dropped. This emphasizes that according to common practice, the various features of the drawings are not drawn to scale unless otherwise indicated. On the contrary, the dimensions of the various features may be expanded or reduced for clarity. Included in the drawings are the following figures:
FIG. 1 depicts an exemplary transaction card having a monolithic ceramic body.
FIG. 2 depicts a cross-sectional diagram of an exemplary transaction card comprising a ceramic layer on a substrate.
FIG. 3A depicts a plan view of an exemplary transaction card comprising a ceramic layer set into a pocket in a substrate
FIG. 3B depicts a cross-sectional view of the exemplary transaction card of FIG. 3A.
FIG. 3C depicts a plan view of an exemplary transaction card comprising a ceramic layer mounted inside a frame formed by the substrate layer.
FIG. 4A depicts a cross-sectional view of an exemplary transaction card construction comprising a substrate layer, a first ceramic layer and a second ceramic layer.
FIG. 4B depicts a cross-sectional view of another exemplary transaction card construction comprising a substrate layer, a first ceramic layer and a second ceramic layer.
FIG. 5 depicts a cross-sectional view of yet another exemplary transaction card construction comprising a substrate layer, a first ceramic layer and a second ceramic layer.
FIG. 6 depicts a plan view image of an exemplary ceramic card having a flower design thereon.
FIG. 7 depicts an edge view of the exemplary card of FIG. 6.
FIG. 8 is a flowchart of showing exemplary steps of an exemplary process for manufacturing an exemplary ceramic card embodiment.

### DETAILED DESCRIPTION OF THE INVENTION

Aspects of the invention relate to transaction cards. As used herein, transaction cards, also known as data cards or smart cards, include credit cards, debit cards, check cards, stored-value cards, gift cards, retail cards, or any other transaction card. Both "contact" and "contactless" bi-directional communication data transaction cards are included. Transaction cards may be provided with either with electrical contacts for effecting direct electrical contact with a card reader, or with an antenna coil for effecting contactless bi-directional communication with a remote card reader. Transaction cards may also be provided with both "contact" and "contactless" platforms, e.g., dual interface cards.

The inventors have recognized that it would be useful to provide a transaction card that provides a premium feel, look, or tactile feature and that avoids the disadvantages associated with some metal-based transaction cards. The inventors have further recognized that, by employing transaction cards comprised entirely of ceramic, having ceramic inserts, or utilizing a ceramic coating, that transaction cards may be obtained in a variety of colors and with a variety of desired features such as, e.g., laser signatures or decorative designs. The inventors have also realized that the use of ceramic materials offers new possibilities to increase card lifespan and to make counterfeiting more challenging. The inventors have recognized that these benefits may be realized in transaction cards created entirely of ceramic, having ceramic inserts, or utilizing a ceramic coating.

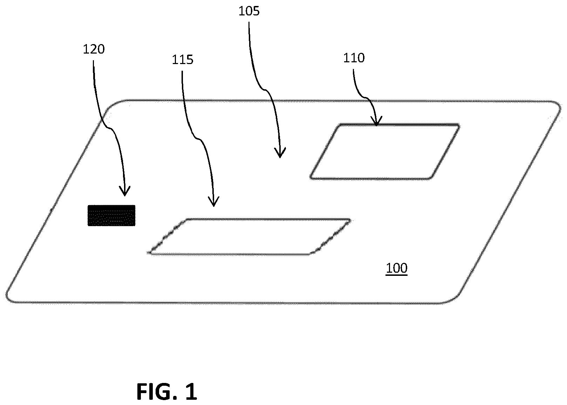

FIG. 1 depicts a transaction card 100 having a monolithic ceramic body 105 according to one aspect of the present invention.

Monolithic ceramic body 105 may be manufactured from one or more materials including zirconia, alumina, beryllia, ceria, ceramide, carbide, boride, nitride, and silicide. In one embodiment, monolithic ceramic body 105 is a yttrium-stabilized zirconia. One of ordinary skill in the art will understand that other ceramic materials may be used without departing from the spirit of the invention disclosed herein.

One or more pockets 110 in monolithic ceramic body 105 are configured to receive a variety of components including, e.g., at least one of a magnetic stripe, a barcode, one or more embedded microchips, a hologram, a signature panel, commercial indicia, or any other component typically contained on or within a transaction card. Embedded microchip 120 may comprise a contact chip module, a contactless chip module, a dual interface chip module, or a booster antenna. One or more pockets 110 may also be provided for decorative purposes.

In one embodiment, a magnetic stripe is bonded directly to a polished surface of monolithic ceramic body 105. A variety of adhesives are suitable to perform this bonding including, but not limited to heat-curable vinyl acetate.

Transaction card 100 may further include at least one security feature 120. The security feature 120 may comprise, for example, one or more through holes, windows, microtext, lumiphores, or combination thereof, as well as other such features known in the art. In an exemplary embodiment, all or a portion of monolithic ceramic body 105 is doped with a lumiphore, such as for example inorganic materials including NaGdF₄:Yb/Tm, Y₂SiO₅:Pr/Li, Y₂O₃:Eu, LaPO₄:Ce/Tb, and organic/inorganic hybrid materials including quantum dots and CU dots without limitation thereto, such that incident wavelengths of light are quenched, upconverted, or downconverted. In this respect, the inclusion of lumiphores permits the creation of a unique light-based "watermark".

Various colors and textures may be imparted to transaction card 100. Color may be introduced to transaction card 100 by an overcoat or by adding pigments and/or dyes into the ceramic body. In one embodiment, the ceramic material used to fabricate transaction card 100 is substantially optically transparent (e.g., having an optical transparency greater than 70%).

Additional decorative features may be machined or produced using inkjet, drop on demand printing, or laser ablation. In one embodiment, a signature panel 115 is produced by ablating/etching a portion of monolithic ceramic body 105, thereby making that particular area of monolithic ceramic body 105 receptive to ink or dye. A user can then authenticate transaction card 100 by executing a signature directly onto monolithic card body 105. Alternatively, the user's signature can be digitized and then laser engraved onto the monolithic card body 105. By manufacturing signature panel 115 in this manner, cost savings are realized in the elimination of additional components and steps (e.g., a separate polymeric signature panel and the adhesive necessary to hold this separate component in place).

Other functional features (e.g., magnetic stripe, branding, hologram, etc.) and/or decorative designs may be applied directly to the surface of monolithic ceramic body or a pocket may be engraved into monolithic ceramic body 105 via laser or mechanical engraving to receive such features or designs.

Transaction card 100 may be characterized by the nominal dimensions of a standard sized card (e.g., 3.37" x 2.125" x 0.03"). One of ordinary skill in the art will understand that transaction cards of different dimensions may be made without departing from the scope of the invention disclosed herein.

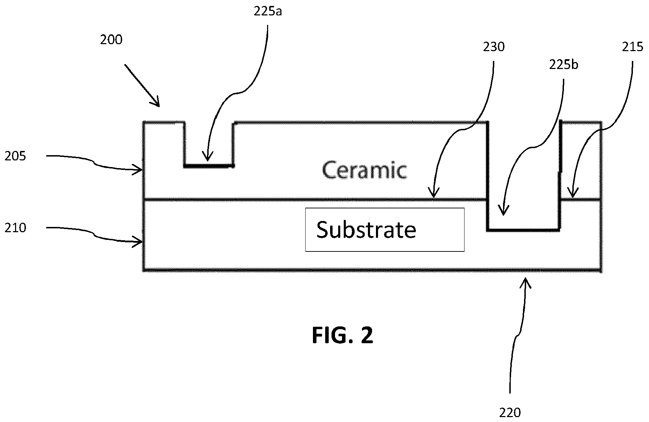

Turning to FIG. 2, a cross-sectional diagram of transaction card 200 according to the present invention is shown. In this embodiment, transaction card 200 includes a substrate layer 210 having a first side 215 and a second side 220.

Substrate layer 210 may be any suitable metal, such as stainless steel, bronze, copper, titanium, tungsten carbide, nickel, palladium, silver, gold, platinum, aluminum, or any alloy which gives the card most of its body (structure) and weight. Additionally, or alternatively, substrate layer 210 may be one or a composite of any suitable polymeric (e.g., polycarbonate, polyester, PVC, PETG, PLA, and blends thereof) and inorganic (e.g., glass, ceramic, cellulosic) material. The invention is not limited, however, to any particular substrate material. In one embodiment, substrate layer 210 includes both a layer of metal connected to a second layer of polymeric or inorganic material. In another embodiment, substrate layer 210 includes a plurality of bonded metal layers.

The materials of a composite substrate layer 210 may be selected such that a specific weight is achieved or to display a particular color upon exposure of the ceramic layer(s) to laser marking. The materials may also be selected as a function of cost efficiency or other desirable benefits (e.g., metal/plastic composite cards with single and dual ceramic coatings may achieve desired manufacturing costs, weights, and artistic effects).

Substrate layer 210 may have a thickness ranging of 0.0005" to 0.0325". Where substrate layer 210 is a composite (e.g. multiple layers of metal, multiple layers of metal and another component), the first layer of substrate layer 210 may range from 0.0001" to 0.0315" and the second layer of substrate layer 210 may range from 0.0001" to 0.0315". Other suitable thicknesses for substrate layer 210 are within the scope of the invention and will become apparent upon review of the information and teachings disclosed herein.

First ceramic layer 205 is connected to first side 215 of substrate layer 210. It should be noted that any sort of direct or indirect connection between first ceramic layer 205 and the first side 215 of substrate layer will suffice. For example, the requisite connection could be achieved where first ceramic layer 205 is directly attached to or coated on an intermediary substrate (not shown), which intermediary substrate is adhered to substrate layer 210.

First ceramic layer 205 may have, for example, a thickness ranging from about 0.00075" to about 0.003" for sprayed ceramic and about 0.001" to about 0.0032" for solid ceramic, but the invention is not limited to any particular range of thicknesses.

A variety of methods may be used to connect first ceramic layer 205 and substrate layer 210. In one embodiment, first ceramic layer 205 is spray coated to a sufficient thickness onto substrate layer 210. The spray coated layer is then thermally, air, or UV cured.

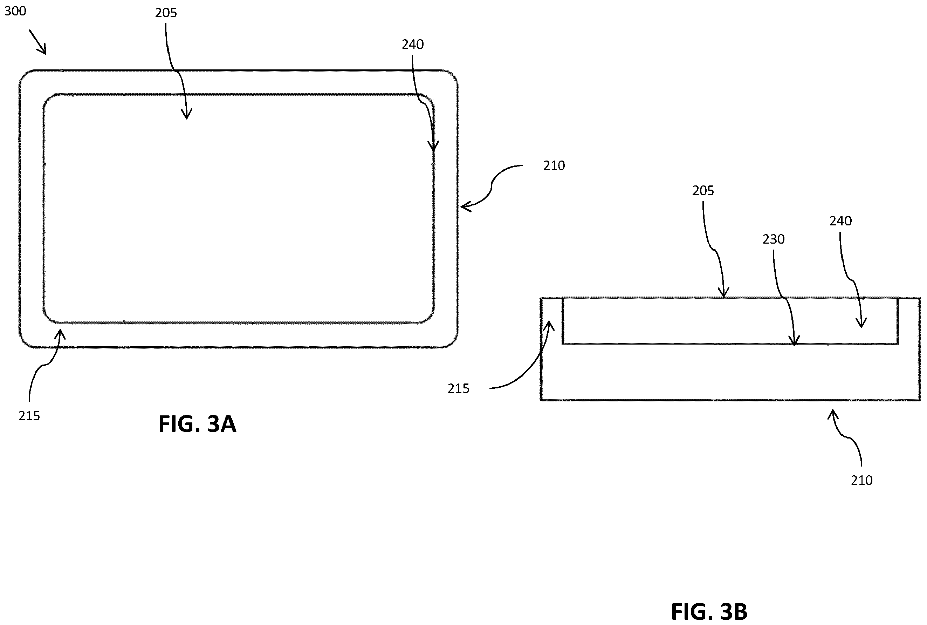

FIGS. 3A and 3B depict an exemplary transaction card 300 deploying another manner of connecting first ceramic layer 205 and substrate layer 210 according to the present invention. In this embodiment, first ceramic layer 205 is an insert set into a pocket 240 (which may be created using, e.g., machining, lasering, milling) in first side 215 of substrate layer 210. An adhesive 230 may be used to adhere first ceramic layer 205 and substrate layer 210. Suitable adhesives may include epoxies, cyanoacrylate, acid modified polyolefin, silicone elastomers, and other naturally occurring adhesives, but the invention is not limited to any particular type of adhesive.

In another embodiment, first ceramic layer 205 is press-fit into pocket 240 in substrate layer 210. Press-fitting is intended to refer to any suitable means by which the ceramic insert is geometrically secured into pocket 240 in substrate layer 210. For example, one method of press-fitting includes "dove tailing" (not shown), in which one or more shapes in the edge of first ceramic layer 205 interlock with mating shapes in the inner edge of substrate layer 210. For example, a male feature in first ceramic layer may fit into a female receptor in the substrate, the ceramic layer may have a female receptor sized to receive a male feature in the substrate, or a combination thereof.

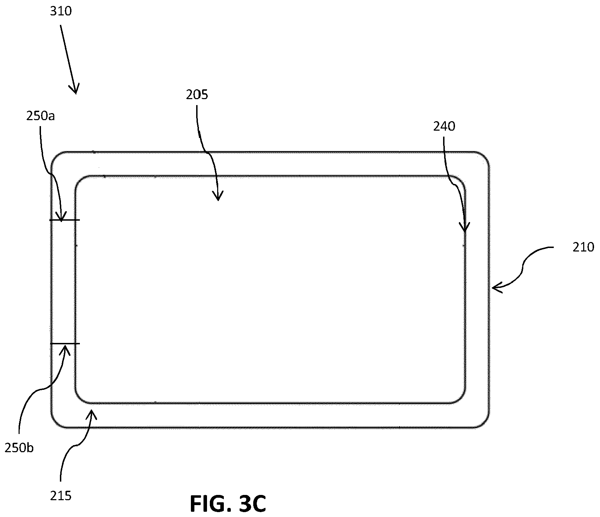

Turning to FIG. 3C, still another embodiment for connecting first ceramic layer 205 to substrate layer 210 is depicted with respect to exemplary transaction card 310. In this embodiment, substrate layer 210 includes one or more tapped holes 250a,b such that substrate layer 210 acts as a frame, in which set screws disposed in the tapped holes hold first ceramic layer 205 within pocket 240. One of ordinary skill in the art will, upon reading this disclosure, appreciate the existence of other suitable methods for connecting first ceramic layer 205 and substrate layer 210 that fall within the scope of the present invention.

Turning back to FIG. 2, one or more pockets 225a,b in transaction card 200 are configured to receive one or more of the components described above, e.g., at least one of a magnetic stripe, one or more embedded microchips, a hologram, a signature panel, commercial indicia, or any other component typically contained on or within a transaction card. As depicted, one or more pockets 225a,b may extend for a portion or the entirety of the cross-sectional length of first ceramic layer 205 (225a) and/or, in some embodiments, into substrate layer 210 (225b). In some embodiments, one or more pockets 225a,b extend through the entirety of the cross-sectional length of the first ceramic layer 205, so that the desired components can bond directly to the substrate layer 210 (which can be, e.g., a metal layer).

In other embodiments, one or more pockets 225a,b may extend into substrate layer 210 without breaching the surface of first ceramic layer 205 (e.g., to contain a hidden component such as a booster antenna).

In still other embodiments, one or more pockets may also be produced in substrate layer 210 that ultimately result in depressions in the ceramic coating into which later components may be set to produce a smooth surface in transaction card 200.

For example, in an embodiment in which first ceramic layer 205 is spray coated onto substrate layer 210, one or more pockets 225a,b may be created by providing one or more pockets 225a,b in substrate layer 210 prior to spray-coating. However, it is not necessary to first create pockets in substrate layer 210; one or more pockets may be produced alternatively after spray-coating. Any suitable process may be used to create the one or more pockets 225a,b in substrate layer 210 such as, e.g., mechanical engraving, chemical laser etching, milling, etc.

In one embodiment, first ceramic layer 205 is a sprayed ceramic layer applied to substrate layer 210, which is a polycarbonate sheet. The polycarbonate sheet may be laminated to a desired thickness, bead blasted, sprayed with ceramic to create first ceramic layer 205, and then cured. Individual transaction cards 200 may be produced through punching, lasering, machining, or any other method known in the art.

As described above, various colors and textures may be imparted to transaction card 100. Color may be introduced to transaction card 200 by an overcoat or by adding pigments and/or dyes into the ceramic body. In one embodiment, the ceramic material used to fabricate transaction card 200 is substantially optically transparent, revealing the color and appearance of underlying substrate layer 210.

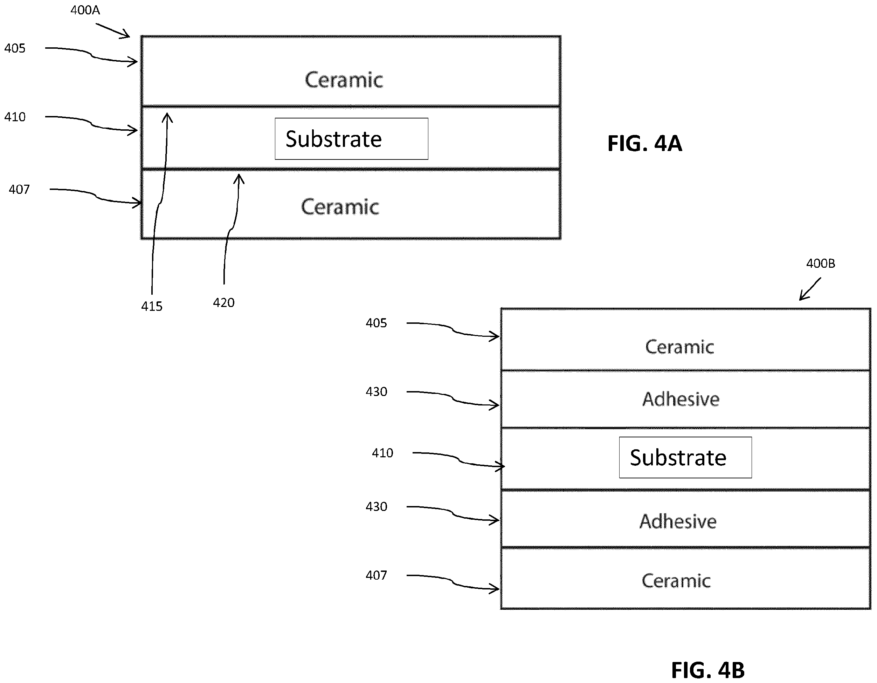

FIGS. 4A and 4B depict cross-sectional diagrams of exemplary transaction cards 400A and 400B respectively, according to exemplary embodiments of the present invention. In these embodiments, transaction card 400A includes a substrate layer 410 having a first side 415 and a second side 420.

First ceramic layer 405 is connected to first side 415 of substrate layer 410.

Second ceramic layer 407 is connected to second side 420 of substrate layer 410. As described above, any sort of direct or indirect connection between first ceramic layer 405, second ceramic layer 407, and the respective sides of substrate layer 410 (including through intermediary layers) will suffice.

Any of the connection methods, or combination of these methods, described above (e.g., coating on, press-fitting in, or adhering to the substrate layer) may be used to connect first ceramic layer 405 and second ceramic layer 407 with substrate layer 410. For example, first ceramic layer 405 may be spray coated on first side 415 of substrate layer 410, while second ceramic layer 407 may be press-fit into a pocket defined in the second side 420 of substrate layer 410. As another example, shown in FIG. 4B, first ceramic layer 405 may be adhered to first side 415 of substrate layer 410 and second ceramic layer 407 may be adhered to the second side 420 of substrate layer 410 by adhesive layers 430.

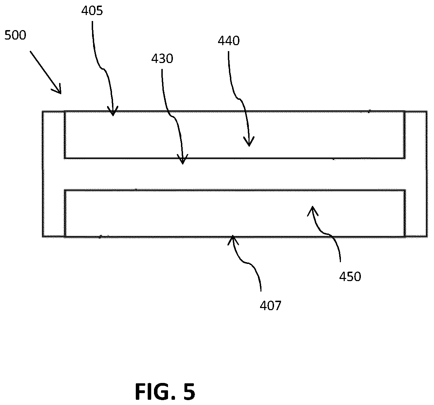

Similar to the card depicted in FIG. 3B, FIG. 5 depicts a card 500 comprising a first ceramic layer 405 and second ceramic layer 407, which are inserts set into pockets 440 and 450 (which may be created using, e.g., machining, lasering, milling) in substrate layer 410. As above, the ceramic layers may be press-fit, or an adhesive, such as but not limited to epoxies, cyanoacrylate, acid modified polyolefin, silicone elastomers, and other naturally occurring adhesives, may be used to adhere, the ceramic layers into pockets 440 and 450.

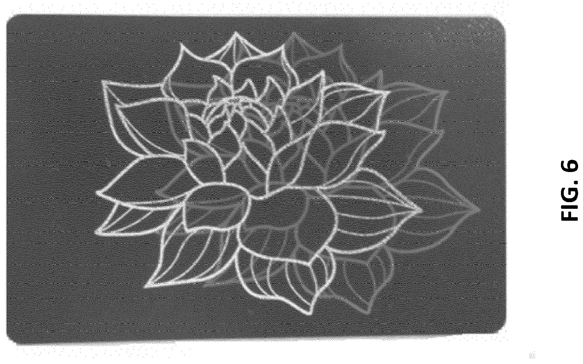

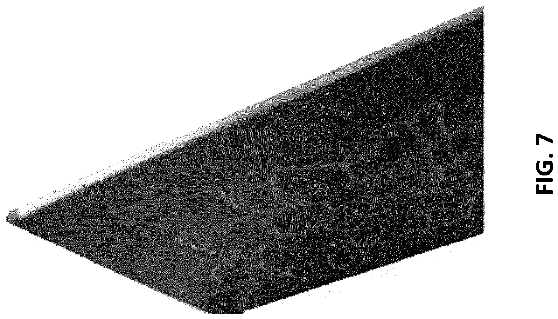

In one exemplary embodiment, 0.02" thick metal core (such as steel) may be bonded to a 0.007" thick PVC layer on one side with a ceramic coating on the un-bonded surface of the metal core. The ceramic may be applied as a spray coating, which is then cured. After curing, the coating may range from, e.g., 0.001" to 0.003" thick, depending on the desired look and texture of the coating. The coatings may, as described above, be produced in a variety of colors. The coating may be comprised of ceramic microparticles and a curable resin binder suspended in a carrier solution. Exemplary ceramic microparticle or nanoparticle materials may include one or more of the following: zirconia dioxide, aluminum disilicide, aluminum cerium oxide, aluminum oxide, aluminum titanate, antimony(III) oxide, antimony tin oxide, barium ferrite, barium strontium titanium oxide, barium titanate(IV), barium zirconate, bismuth cobalt zinc oxide (Bi₂O₃)_{0.07}(CoO)_{0.03}(ZnO)_{0.90} bismuth(III) oxide, boron nitride, calcium oxide, calcium phosphate, calcium titanate, calcium zirconate, cerium iron oxide hydroxide aqueous nanoparticle dispersion, cerium(IV) oxide, cerium(IV)-zirconium(IV) oxide, chromium(III) oxide, cobalt aluminum oxide, cobalt(II,III) oxide, copper iron oxide, copper zinc iron oxide, dysprosium(III) oxide, erbium(III) oxide, europium(III) oxide, titania, silica, ceria, alumina, iron oxide, vanadia, zinc oxide, tin oxide, nickel oxide, and combinations thereof, but the invention is not limited to any particular ceramic materials. Commercial examples of polyceramic coatings containing both polymeric and ceramic components include those sold in connection with the trade names CERAKOTE by NIC Industries, Inc., Ceraset™ by KiON International, and DuraCoat, DuraBake, DuraHeat, by Dura Coat Products, Inc. the manufacturer's specifications for which are hereby incorporated by reference. Once sprayed and cured, the coating provides a unique color and texture to the cards along with a durable finish, typically reaching several thousand Taber abrader cycles. The ceramic coating may be modified with mechanical or chemical engraving, inkjet printing, laser marking and other methods known in the art to provide a desired artistic effect. One example of such an effect is depicted in FIGS. 6 and 7, which depict a card having a flower design, such as may be produced via laser marking.

The ceramic portions of the transaction cards disclosed herein may be manufactured using, e.g., injection molding to achieve a desired shaped, followed by sintering/firing of the molded unit. One or more pockets (FIG. 1, element 110) may be created during the injection molding process.

Additionally, instead of injection molding, the ceramic portions of the transaction cards disclosed herein may be stamped or tape cast prior to firing. One of ordinary skill in the art will understand that additional methods may be used to manufacture transaction cards according to the present invention. For example, such cards may be created from larger blocks of ceramic and be machined to a desired size using an endmill, laser, waterjet, 3D printing, or any other means known in the art.

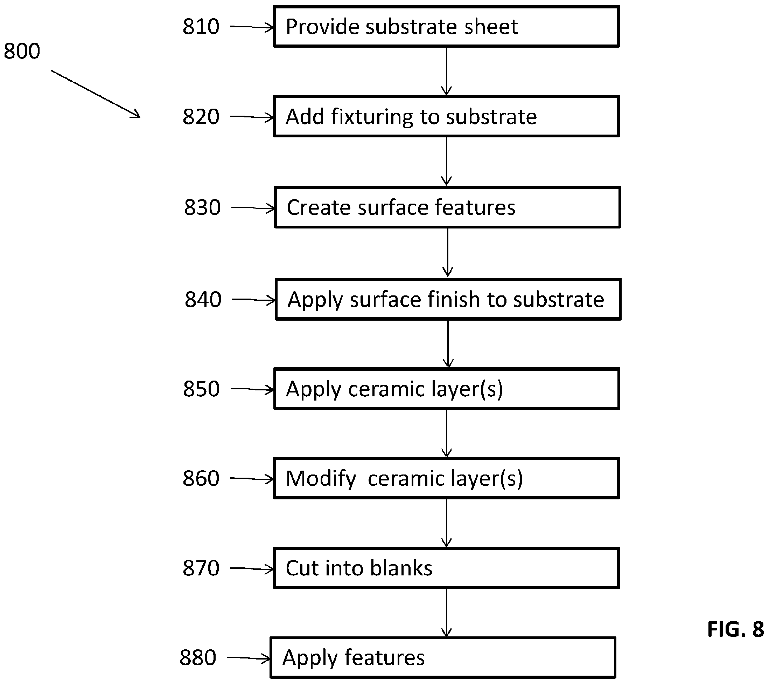

Turning to FIG. 8, a flow diagram depicting selected steps of a process 800 for manufacturing a transaction card according to aspects of the present invention is shown. It should be noted that, with respect to the methods described herein, it will be understood from the description herein that one or more steps may be omitted and/or performed out of the described sequence of the method (including simultaneously) while still achieving the desired result.

In step 810, a substrate layer, e.g., a metal core sheet, is provided. Optionally, this step may include laminating a suitable metal foil, such as an aluminum foil, to one or more surfaces of an inner sub-core (which may be, e.g., metal, polymeric, or inorganic).

In step 820, fixtures are added to the substrate layer to hold the layer in place while subsequent steps are performed.

In step 830, one or more pockets are provided in the substrate layer for receiving functional or decorative features. For example, a pocket may be defined to receive a booster antenna for use in connection with an RFID chip, which can be disposed below the ceramic layer. Pockets may also be produced in the substrate layer that ultimately result in depressions in the ceramic coating into which later components (such as the RFID chip) can be attached at the end of processing, to provide for a smooth surface in the final product.

In step 840, the substrate layer receives a surface finish. Surface finishing can include any method suitable for the particle materials of the substrate layer such as, e.g., bead blasting, tumbling, brushing, etc.

In step 850, one or more ceramic layers and/or coatings are applied to the substrate layer through, e.g., spray coating. The one or more ceramic layers/coatings may also be connected, as described above, through defining pocket(s) in the side(s) of the substrate layer and press-fitting or adhering ceramic insert(s) into the pocket(s).

In step 860, the ceramic layer(s)/coatings are laser marked with designs or other surface features. Additional mechanical, chemical, or laser modifications needed to facilitate later attachment of other features or design components is also performed. For example, edges of any pockets or depressions may be processed for a better fit of features to be added in a subsequent step or areas where an adhesive is later applied may be roughened for better adhesion.

In step 870, the composite sheet is cut into card blanks using, e.g., a CNC (computer numerical control) machine.

In step 880, functional and security features are applied to the individual card blanks. As noted above, such features may fit in a pocket created earlier in the process or adhesively attached to an area that has been roughened. In one embodiment, the magnetic stripe is applied directly on the ceramic layer. This desirably optimizes the planar and flat characteristics of the transaction card surface

Although the invention is illustrated and described herein with reference to specific embodiments, the invention is not intended to be limited to the details shown. Rather, various modifications may be made in the details within the scope and range of equivalents of the claims and without departing from the invention.

## Claims

1. A transaction card comprising a monolithic ceramic card body including one or more pockets, and at least one of a magnetic stripe, a barcode, and a laser signature portion.

2. The transaction card of claim 1, wherein the one or more pockets are configured to receive at least one of the magnetic stripe, the barcode, a contact chip module, a contactless chip module, a dual interface chip module, a booster antenna, a hologram, or commercial indicia.

3. The transaction card of claim 2, wherein the monolithic ceramic card body is substantially optically transparent.

4. The transaction card of claim 2, wherein the ceramic monolithic card body comprises one or more of zirconia, alumina, beryllia, ceria, ceramide, carbide, boride, nitride, and silicide.

5. The transaction card of claim 4, wherein the zirconia is a yttrium-stabilized zirconia.

6. The transaction card of claim 4, further comprising at least one security feature.

7. The transaction card of claim 6, wherein the at least one security feature is selected from the group consisting of throughholes, windows, microtext, andl uminphores.

8. The transaction card of claim 4, further comprising one or more pigments sufficient to impart a color to the transaction card.

9. The transaction card of claim 4, wherein the laser signature portion comprises a laser-applied digitized signature.

10. The transaction card of claim 4, wherein the laser signature portion comprises a surface prepared by a laser to receive a user's signature.

11. The transaction card of claim 1, wherein the magnetic stripe is positioned on a finished surface of the monolithic card body.
